Europäisches Patentamt

European Patent Office

Office européen des brevets

(19)

(11) Veröffentlichungsnummer: **0 451 622 A2**

(12) # EUROPÄISCHE PATENTANMELDUNG

(21) Anmeldenummer: **91104863.5**

(51) Int. Cl.5: **H04N 5/445**

(22) Anmeldetag: **27.03.91**

(30) Priorität: **06.04.90 DE 4011102**

(43) Veröffentlichungstag der Anmeldung:
**16.10.91 Patentblatt 91/42**

(84) Benannte Vertragsstaaten:
**AT DE FR IT**

(71) Anmelder: **Blaupunkt-Werke GmbH**
**Robert-Bosch-Strasse 200**
**W-3200 Hildesheim(DE)**

(72) Erfinder: **Eilers, Norbert**
**Seebothstrasse 19**
**W-3200 Hildesheim(DE)**

(74) Vertreter: **Eilers, Norbert, Dipl.-Phys.**
**Robert-Bosch-Strasse 200**
**W-3200 Hildesheim(DE)**

(54) **Fernsehempfänger mit einem zusätzlichen Zeichengenerator.**

(57) Es wird ein Fernsehempfänger mit einem zusätzlichen Zeichengenerator beschrieben, der mit einem Speicher für Termindaten verbunden ist, welcher bei jeder Betätigung des Geräteeinschalters zwangsläufig ausgelesen wird.

Fig. 1

EP 0 451 622 A2

Gegenstand des Schutzrechts ist ein neuer Fernsehempfänger mit einem zusätzlichen Zeichengenerator.

Zusätzliche Zeichengeneratoren werden z. B. in den Fernsehempfängern mit einer Bedienerführung benutzt. In diesen Geräten werden auf dem Bildschirm Anweisungen dargestellt, wie man z. B. die gewünschten Sender den Stationstasten zuordnet. Mit Hilfe eines im Fernsehempfänger gespeicherten Steuerprogramms kann man mit der Gerätebedienung dazu auf dem Bildschirm in zugehörige Spalten neben der Stationstasten-Nummer die Kurzbezeichnungen der Sender, wie ARD, ZDF, eintragen. Die eingetragene Zuordnung wird dabei in den entsprechenden Speicher für die Bedienerführung genommen.

Dem neuen Fernsehempfängerkonzept lag die Aufgabe zugrunde, weitere Anwendungsmöglichkeiten der verfügbaren Technik zu suchen.

Eine Lösung dieser Aufgabe ist die Verwendung des Fernsehempfängers als Terminkalender mit den in Anspruch 1 angeführten Besonderheiten.

Anhand einer Zeichnung wird die Erfindung näher erläutert.

Jeder Fernsehempfänger verfügt über ein Netzteil 1, einen an die Antenne 2 angeschlossenen Tuner 3, einen Videosignalverstärker 4, einen Bildschirm 5 sowie Zeilen- und Bildablenkstufen 6. Letztere werden von Impulsen des empfangenen Senders synchronisiert und steuern die Darstellung des Bildinhaltes auf dem Bildschirm über die angeschlossenen Strahlablenkungsspulen 7 auf dem Hals der Bildröhre. Bei videotextfähigen Fernsehempfängern ist ein Videotextdecoder 8 in dem Videoverstärker 4 enthalten. Der Videotextdecoder 8 umfaßt einen Zeichengenerator 9. Ein vereinfachtes Blockschaltbild eines Videotextdecoders ist z. B. in Liman/Pelka "Fernsehtechnik ohne Ballast", 14. Auflage, Seite 509, abgebildet und erläutert.

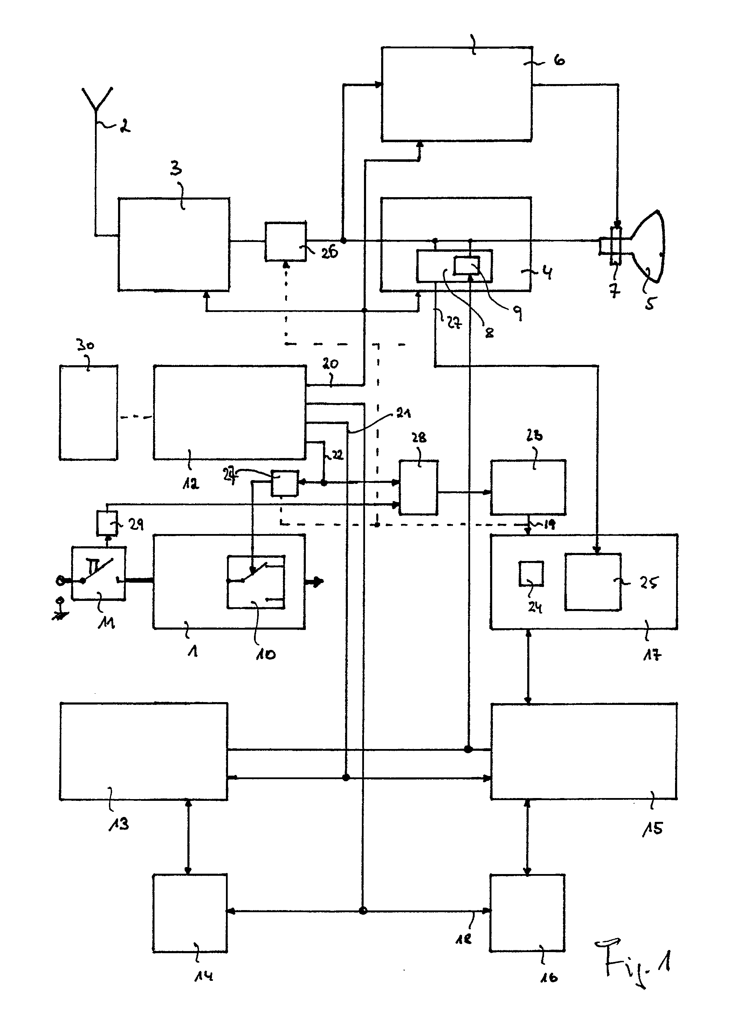

Das Netzteil 1 verfügt über eine "Stand by"-Betriebsstellung. Diese ist in dem bereits genannten Buch in dem Blockschaltbild eines Steuer-ICs für Sperrwandler-Netzteile auf Seite 261 erwähnt. In der Zeichnung ist diese Umschaltung zwischen den beiden Betriebsmöglichkeiten durch den Umschalter 10 angedeutet. Im Eingang des Netzteils liegt der Geräteein-/-ausschalter 11. Weitere Einzelheiten des Netzteils sind für die Erfindung selbst nicht relevant.

Während der Ein-/Ausschalter 11 direkt manuell betätigt wird, erfolgt die Betätigung des Umschalters 10 über einen Fernbedienungsempfänger 12. Fernbedienungsempfänger sind in dem erwähnten Buch z. B. in einem Blockschaltbild auf Seite 487 dargestellt. Die verschiedenen Bedienungsstellgrößen für die einzelnen Schaltblöcke des Fernsehempfängers sind am Ausgang 20 des Fernbedienungsempfängers abnehmbar. Über den Fernbedienungsempfänger 12 lassen sich in neueren Fernsehempfängern auch Buchstaben und Zahlen in einen Speicher 13 eingeben, in welchem über einen Datenbus 21 die Zuordnung der einzelnen Stationstasten zu den damit einstellbaren Sendern eingebbar sind, die danach auf dem Bildschirm sichtbar gemacht werden können. Die Steuerung dieser Darstellung erfolgt über eine Steuerschaltung 14, die ähnlich wie der Videotextdecoder aufgebaut ist, und ebenfalls den Zeichengenerator 9 mitbenutzt.

Erfindungsgemäß sind über den Fernbedienungsempfänger 9 in einem weiteren Speicher 15 Termine eingebbar, an die der Gerätebesitzer erinnert werden will. Der Speicher ist entsprechend der vorgestellten Weiterentwicklung mit zwei Steuerschaltungen 16, 17 mit einem ersten und einem zweiten Steuerprogramm verbunden, die über getrennte Starteingänge 18, 19 verfügen. Die erste Steuerschaltung 16 steuert die Eingabe eines Termins in den Speicher 15, die zweite Steuerschaltung 17 die Auslesung der gespeicherten Termine zur Darstellung auf dem Bildschirm 5 durch den Zeichengenerator 9.

Der Starteingang 19 der zweiten Steuerschaltung 17 ist über ein Zeitglied 23 und eine Oderstufe 28 einerseits an einem Impulsgeber 29 am Ein-/Ausschalter 11 und andererseits an den "Stand by"-Kennungsausgang 22 des Fernbedienungsempfängers angeschlossen, so daß bei jedem Ein- und Ausschalten des Fernsehempfängers oder bei jedem Übergang zwischen "Voll"-Betrieb und "Stand by"-Betrieb ein Start des zweiten Steuerprogramms erfolgt.

Die Darstellung des Terminkalenders auf dem Bildschirm, vornehmlich in einer Randzone, kann sich entweder dem empfangenen Signal überlagern oder aber vor der Darstellung des empfangenen Signals oder danach eingeblendet werden. In beiden Fällen wird zum Auslesen des Speichers ein Zeitglied 23 gestartet, das während seiner Standzeit z. B. einen Arbeitskontakt 24 in der zweiten Auslesesteuerschaltung 17 schließt, so daß und nur während der Standzeit des Zeitgliedes 23 eine Darstellung der Termine auf dem Bildschirm erfolgt.

Für die Darstellung der Termine beim Einschalten des "Stand by"-Betriebes, also beim Ausschalten des üblichen Fernsehbetriebes, wird das Wirksamwerden der "Stand by"-Kennung im Netzteil für die Standzeit des Zeitgliedes verzögert, und zwar durch den gestrichelt dargestellten Schaltblock 24. Soll die Darstellung der Termine dem empfangenen Signal nicht überlagert werden, dann kann in der Ausgangsleitung 25 des Tuners 3 ein Ruheschalter 26 eingefügt sein, der während der Standzeit des Zeitgliedes 23 unterbrochen ist.

Der übrige, nicht näher beschriebene Aufbau der Steuerschaltung kann im Prinzip der bekannten Steuerung zum Auslesen der Belegung der Stationstasten in marktgängigen Geräten der Patentinhaberin entsprechen.

Die Realisierung der Erfindung ist auch in anderen Geräten möglich, die über ein Display und einen Zeichengenerator verfügen.

Eine Besonderheit ist den Fernsehempfängern mit Videotextdecodern vorbehalten, die neben der Tageszeit auch den Kalendertag aus dem Videotexttelegramm entschlüsseln. Ein Ausgang 27 des Videotextdecoders 8, an dem sich der Kalendertag abgreifen läßt, ist mit einer Datumsvergleichsschaltung 28 in der Auslesesteuerschaltung 17 verbunden. Diese Datumsvergleichsschaltung vergleicht die am Ausgang 27 abgegriffenen Kalendertagsdaten mit den gespeicherten Kalendertagsdaten und gibt nur die für den jeweiligen Kalendertag eingetragenen Termine zur Darstellung frei, gegebenenfalls noch die Termine des vorangegangenen und des folgenden Tages.

**Patentansprüche**

1. Fernsehempfänger mit einem Speicher für Daten eines Kalenders und einem zusätzlichen Zeichengenerator zur Darstellung der Daten auf dem Bildschirm,
gekennzeichnet
durch ein Zeitglied, dessen Standzeit bei jedem Ein- und/oder Ausschalten des Netzteils mittels eines vom Ein-/Ausschalter gesteuerten Impulsgebers eingeleitet wird und das während seiner Standzeit die Darstellung der im Speicher festgehaltenen Daten des Terminkalenders auf dem Bildschirm bewirkt.

2. Fernsehempfänger nach Anspruch 1, welches mittels einer Fernbedienung zwischen "Voll-Betrieb" und "Standby-Betrieb" umschaltbar ist,
dadurch gekennzeichnet,
daß die Standzeit des Zeitgliedes auch durch jede Umschaltung mittels der Fernbedienung einleitbar ist.

3. Fernsehempfänger nach Anspruch 1 oder 2,
gekennzeichnet
durch einen Videotextdecoder (8) mit einem Ausgang (27) für die Kalendertagesdaten und durch eine an den Ausgang (27) angeschlossene Datumsvergleichsschaltung (28) in der zweiten Steuerschaltung (17), die nur die Darstellung der gespeicherten Termine zuläßt, bei denen die Vergleichsschaltung (28) ein Übereinstimmungssignal abgibt.

4. Fernsehempfänger nach Anspruch 3,
dadurch gekennzeichnet,
daß die Vergleichsschaltung (28) ein Übereinstimmungssignal auch bei den Terminen des vorausgegangenen und des folgenden Tages abgibt.

Fig. 1